# EUROPÄISCHE PATENTANMELDUNG

(11) **EP 0 976 582 A2**
(43) Veröffentlichungstag der Anmeldung: **02.02.2000**
(21) Anmeldenummer: 99114496.5
(22) Anmeldetag: 23.07.1999
(51) Int. Cl.: B60B 21/02

(54) **Fahrzeugrad mit - insbesondere einteiliger - Felge und mit einem - insbesondere schlauchlosen - Luftreifen mit zwei Reifenseitenwänden**

(30) Priorität: 30.07.1998 DE 19834298
(71) Anmelder: Continental Aktiengesellschaft, 30165 Hannover (DE)
(72) Erfinder: Dieckmann, Thomas, Dr., 30982 Pattensen (DE); Bayer, Bernward, Dr., 64720 Michelstadt (DE)

(57) **Zusammenfassung**

Fahrzeugrad mit - insbesondere einteiliger - Felge (1) und mit einem - insbesondere schlauchlosen - Luftreifen (3) mit zwei Reifenseitenwänden (6),
- bei dem die Felge wenigstens in einer axialen Stirnseite mit einer Ringkammer (10) zur Aufnahme des radial inneren Endbereiches einer Seitenwand ausgebildet ist,
- bei dem wenigstens ein Klemmelement (12) zum Festklemmen des radial inneren Endbereiches der Seitenwand gegen eine Stützfläche in der Ringkammer aus einer Klemmposition zum Klemmen des radial inneren Endbereiches der Seitenwand in eine Freigabeposition zum Lösen der Klemmung bzw aus seiner Freigabeposition in die Klemmposition axial bewegbar angeordnet ist, und
- bei dem zwischen Felge und Klemmelement ein Federschnellverschluß zum axialen Arretieren des Klemmelements auf der Felge in der Klemmposition ausgebildet ist.

## Beschreibung

Die Erfindung betrifft ein Fahrzeugrad mit - insbesondere einteiliger - Feige und mit einem - insbesondere schlauchlosen - Luftreifen mit zwei Reifenseitenwänden sowie ein Verfahren zur Montage eines Luftreifens auf einer Feige mit Notlaufstützfläche mit beidseitig der Feige jeweils in die - insbesondere einstückig - axiale Stirnseite der Feige ausgebildeter Ringkammer zur Aufnahme des radial inneren Endbereiches der Seitenwand und eines Klemmrings radial innerhalb des radial inneren Endbereiches der Seitenwand zur Befestigung des Luftreifens an der Feige durch axiales Einführen des radial inneren Endbereiches der Seitenwand und des Klemmrings in die Ringkammer.

Schlauchlose Fahrzeugluftreifen moderner Bauart sind üblicherweise an den radial inneren Enden ihrer Seitenwände zu Wülsten ausgebildet. Von Reifenwulst zu Reifenwulst erstreckt sich eine aus mit Gummi beschichteten Festigkeitsträgem ausgebildete Karkasse radialer Bauart. In jedem Reifenwulst ist ein ringförmiger, konzentrisch zur Reifenachse angeordneter zugfester, steifer Wulstkern aus Stahl ausgebildet, in dem die Karkasse verankert ist. Der Fahrzeugluftreifen wird bei der Montage des Fahrzeugluftreifens auf der Feige mit seinem Wulst auf der radial äußeren Mantelfläche der Feige befestigt. Die hohe Zugfestigkeit und Steifigkeit des Wulstes, die durch die Zugfestigkeit und Steifigkeit des Wulstkerns bewirkt wird, sichert die beim schlauchlosen Reifen gewünschte Abdichtung in der Felgen-Reifenverbindung und sichert den dichten Sitz des Reifens auf der Feige im aufgepumpten Zustand des Reifens. Die zugsteife, zugfeste Ausbildung des Wulstkerns verhindert auch bei anspruchsvollen Fahrmanövern ein axiales Abrutschen des Fahrzeugrades von der Feige über das nach radial außen gerichtete Felgenhorn.

Zur Montage bzw Demontage des Fahrzeugluftreifens muß der zugfeste, zugsteife Wulst bei einer einteiligen Feige mit seinem Innendurchmesser über den gegenüber dem Innendurchmesser des steifen Wulstes größeren Außendurchmesser des Felgenhorns bewegt werden. Um dies zu ermöglichen ist zusätzlicher Aufwand, zB die Ausbildung der Felge mit einem Tiefbett, erforderlich.

Im Falle des Luftdruckverlustes knickt die Reifenseitenwand ein. Dabei kann sie auf das zur axialen Sicherung des Fahrzeugluftreifens auf der Felge ausgebildete Feigenhorn gepreßt werden. Bei Weiterfahrt des Fahrzeugs kann die Reifenseitenwand und das Felgenhorn zerstört werden. Der Fahrzeugluftreifen kann von der Felge springen.

Um dies zu verhindern und um ein sicheres Weiterfahren trotz Druckluftverlust zu ermöglichen, wurde vorgeschlagen auf der radialen Außenseite der einteiligen Felge die Felge mit zusätzlichen über das Felgenhorn radial hinausragenden Notlaufstützflächen auszubilden, auf denen sich der Fahrzeugluftreifen mit seiner radialen Innenseite seines Laufflächenbereichs bei Druckluftverlust abstützt und somit Notlaufeigenschaften nach Druckluftverlust gewährleistet. Die Montage und Demontage der Fahrzeugluftreifen auf derartige Feigen erweist sich als schwierig, da die zugfesten, steifen Wülste sogar über die noch größeren Außendurchmesser der Notlaufstützflächen bewegt werden müssen und die Notlaufstützflächen den zwischen den Wulstsitzflächen auf den Felgen zum Einsatz von Montagehilfen, z. B. für die Ausbildung eines Tiefbetts, zur Verfügung stehenden axialen Raum zusätzlich beschränken. Um den steifen, zugfesten Wulst überhaupt montieren zu können ist das ausführbare Verhältnis zwischen dem Außendurchmesser der Notlaufstützfläche zu dem Innendurchmesser des zugfesten, steifen Wulstes sehr begrenzt. Der Außendurchmesser der Notlaufstützfläche darf nur so groß gewählt werden, daß der steife Wulst noch darüber bewegt werden kann. Hierdurch werden die Notlaufstützflächen zu einem großen Teil vom vergleichsweise kleinen Innendurchmesser des steifen Wulstes und somit von einem für die Notlaufeigenschaften unerheblichen Parameter bestimmt. Über für optimale Notlaufeigenschaften abgestimmte größere Außendurchmesser der Notlaufstützflächen der Feigen lassen sich die Fahrzeugluftreifen nicht mehr montieren.

Von CTS-Reifen ist es bekannt, schlauchlose Fahrzeugluftreifen mit ihren Wülsten auf Stützflächen an der radial inneren Seite der mit an der radial äußeren Seite mit Notlaufstützflächen ausgebildeten, einteiligen CTS-Felge abzustützen. In jedem Reifenwulst ist ein ringförmiger, konzentrisch zur Reifenachse angeordneter zugfester, drucksteifer Wulstkern aus Stahl ausgebildet, in dem die Karkasse verankert ist. Der CTS-Fahrzeugluftreifen wird bei der Montage des Fahrzeugluftreifens auf der Feige mit seinem Wulst auf der radial inneren Mantelfläche der Feige befestigt. Die hohe Zugfestigkeit und Drucksteifigkeit des Wulstes, die durch die Zugfestigkeit und Drucksteifigkeit des Wulstkerns bewirkt wird, sichert die beim schlauchlosen Reifen gewünschte Abdichtung in der Felgen-Reifenverbindung und sichert den dichten Sitz des Reifens auf der Feige im aufgepumpten Zustand des Reifens. Die drucksteife, zugfeste Ausbildung des Wulstkerns verhindert auch bei anspruchsvollen Fahrmanövern ein axiales Abrutschen des Fahrzeugrades von der Feige über das auf der radial inneren Seite der Feige nach radial innen gerichtete Felgenhorn. Ein solcher Reifen ist beispielsweise aus der DE-30 00 428 C2 bekannt.

Da sowohl der Felgensitz als auch das Felgenhorn auf der radial inneren Seite der Felge ausgebildet sind, steht bei einem CTS-Reifen ein größerer axialer Erstreckungsbereich zur Ausbildung von Notlaufstützflächen auf der radial äußeren Mantelfläche der Feige zur Verfügung als bei dem an der radial äußeren Mantelfläche einer Felge herkömmlich befestigten Reifen-Rad-System. Das Felgenhorn stellt auf der radial äußeren Seite der CTS-Felge keinen den Notlauf störendes Felgenelement mehr dar.

Zur Montage bzw Demontage des CTS-Fahrzeugluftreifens muß der zugfeste, drucksteife Wulst mit seinem Innendurchmesser auf der radial äußeren Mantelfläche der Felge über den gegenüber dem Innendurchmesser des steifen Wulstes größeren Außendurchmesser der Notlaufstützflächen und auf der radial inneren Mantelfläche der Felge über den gegenüber dem Innendurchmesser des steifen Wulstes kleineren Innendurchmesser bewegt werden. Um dies zu ermöglichen, ist zusätzlicher Aufwand, zB die Ausbildung der Felge mit einem Hochbett auf der radial inneren Mantelfläche sowie aufwendige spezielle Montagetechniken, erforderlich.

Die Montage und Demontage der Fahrzeugluftreifen auf derartige Feigen erweist sich somit ebenso als schwierig, da auch die zugfesten, drucksteifen CTS-Wülste über die noch größeren Außendurchmesser der Notlaufstützflächen auf der radialen Außenseite der Felge und über den gegenüber dem Innendurchmesser des steifen Wulstes kleineren Innendurchmesser auf der radial inneren Mantelfläche der Felge bewegt werden müssen. Um den drucksteifen, zugfesten Wulst überhaupt montieren zu können, ist auch beim CTS-Reifen das ausführbare Verhältnis zwischen dem Außendurchmesser der Notlaufstützfläche zu dem Innendurchmesser des zugfesten, drucksteifen Wulstes noch sehr begrenzt. Der Außendurchmesser der Notlaufstützfläche darf nur so groß gewählt werden, daß der steife Wulst noch darüber bewegt werden kann. Hierdurch werden die Notlaufstützflächen auch beim CTS-Reifen noch zu einem großen Teil vom vergleichsweise kleinen Durchmesser des steifen Wulstkerns und somit von einem für die Notlaufeigenschaften unerheblichen Parameter bestimmt. Über für optimale Notlaufeigenschaften abgestimmte größere Außendurchmesser der Notlaufstützflächen der Feigen lassen sich die Fahrzeugluftreifen mit ihren steifen Wülsten nicht mehr montieren.

Aus der DE 19530939 C1 ist ein Fahrzeugrad mit einteiliger Feige und schlauchlosem, wulstlosem Luftreifen bekannt, bei dem die radial äußere Mantelfläche der Felge mit Notlaufstützflächen ausgebildet ist. Der wulstlose Fahrzeugluftreifen ist an der radial innenliegenden Mantelfläche der Felge fest anvulkanisiert. Die wulstfreie Ausbildung des Fahrzeugluftreifens ermöglicht bei einem solchen Reifen die Ausbildung der Notlaufstützflächen unabhängig von Wulstdurchmessern. Zur Ausbildung der Notlaufstützflächen können bei einem derartigen Fahrzeugluftreifen für den Notlauf wichtige Parameter besser berücksichtigt werden, so daß auch zur Notlaufeigenschaftsoptimierung gewünschte größere Durchmesser der Notlaufstützflächen einfach realisiert werden können. Allerdings können solche Fahrzeugluftreifen nicht ohne weiteres zerstörungsfrei demontiert oder gewechselt werden.

Aus der US 1,932,191 ist es bekannt, seitlich in einer Feige einen flexiblen Wulst eines Fahrzeugluftreifen mithilfe eines flexiblen, nicht metallischen zwischen Feige und Wulst ausgebildeten Klemmrings, in einer Umfangsrille zu befestigen. Der flexible Wulst ist mit einem Kern aus Leinentuch oder Korden verstärkt. Der Wulst ist zwar flexibel, aber aufgrund der Steifigkeit in Umfangsrichtung mit unveranderlicher Umfangslänge ausgebildet. Der Wulst kann somit zur Montage verbogen werden. Notlauf oder Notlaufprobleme sind der US 1,932,191 nicht zu entnehmen. Eine axiale Fixierung des Klemmrings erfolgt lediglich durch Reibschluß zwischen Klemmring und Reifen und zwischen Klemmring und Umfangsrille. Dieser ist durch entsprechend Wahl der Passungen mit Preßsitz entweder im funktionssicher im Betrieb ausgelegt, wodurch jedoch die Montage und Demontage des Klemmrings erheblich erschwert wird, oder aber er ist zur einfachen Montage und Demontage mit Spiel ausgelegt, wodurch jedoch die Funktionssicherheit im Betrieb gefährdet wird.

Der Erfindung liegt die Aufgabe zugrunde ein Fahrzeugrad mit - insbesondere einteiliger - Felge und mit einem - insbesondere schlauchlosen - Luftreifen mit zwei Reifenseitenwänden sowie ein Verfahren zur Montage eines Luftreifens auf einer Felge mit Notlaufstützfläche mit beidseitig der Felge jeweils in die - insbesondere einstückig - axiale Stirnseite der Felge ausgebildeter Ringkammer zur Aufnahme des radial inneren Endbereiches der Seitenwand und eines Klemmrings radial innerhalb des radial inneren Endbereiches der Seitenwand zur Befestigung des Luftreifens an der Felge durch axiales Einführen des radial inneren Endbereiches der Seitenwand und des Klemmrings durch die Ringkammer zu schaffen, mit dem in einfacher, funktionsicherer Weise ein derartiges Fahrzeugrad erzeugt werden kann.

Die Aufgabe wird erfindungsgemäß durch die Ausbildung eines Fahrzeugrades gemäß den Merkmalen des Anspruchs 1 sowie durch das Verfahren gemäß den Merkmalen von Anspruch 23 gelöst.

Das Fahrzeugrad läßt sich in einfacher Weise dadurch montieren, daß der Reifen mit seinem radial inneren Endbereich der Seitenwand in die hierzu ausgebildete Ringkammer seitlich eingeführt wird und dann durch einfaches Bewegen des Klemmelements zum Festklemmen des radial inneren Endbereichs der Seitenwand gegen eine Stützfläche in der Ringkammer aus einer Freigabeposition in die Klemmposition festgeklemmt wird, wobei das Klemmelement durch den Federschnellverschluß zwischen Feige und Klemmelement selbständig in seiner Klemmposition arretiert wird. Auf diese Weise läßt sich das Klemmelement einfach in seine Klemmposition bewegen und durch die selbständige Arretierung in der Klemmposition funktionssicher fixieren. Ebenso einfach läßt sich das Fahrzeugrad dadurch demontieren, daß der Federschnellverschluß gelöst, das Klemmelement aus seiner Klemmposition in seiner Freigabeposition axial bewegt und der radial innere Endbereich der Seitenwand aus der Ringkammer entfernt wird

Bevorzugt ist die Ausbildung des Klemmelements gemäß den Merkmalen der Ansprüche 2 und 3, insbesondere ein Federring aus Stahl ist kostengünstig und einfach herstellbar. Er besitzt bei geringem Gewicht eine hohe Steifigkeit und Festigkeit, was einen genauen, definierten Sitz ermöglicht. Die Verwendung von Federstahl verbessert die Festigkeit weiter und ermöglicht eine mehrfache Verwendung des Klemmrings bei einfacher Montage und Demontage.

Die Ausbildung des Fahrzeugrades gemäß den Merkmalen des Anspruchs 4 ermöglicht eine besonders einfache zentrierte Montage, da das Klemmelement Teil eines Ringes ist, der im montierten Zustand des Fahrzeugrades konzentrisch zur Felge - insbesondere in der Ringkammer - angeordnet ist. Die konzentrische Ausführung führt zu einem geometrisch exakt definierten Sitz durch Selbsthemmung des Rings mit guten Rundlaufeigenschaften. Dies vermindert Kraftschwankungen und führt zu gutem Komfort. Die Ausbildung gemäß den Merkmalen des Anspruchs 5 ermöglicht eine besonders einfache und zuverlässige Befestigung, da der Reifen mit einem einzigen Klemmelement unter Minimierung der Bauteile gleichmäßig in einfacher Weise festgeklemmt werden kann. Bevorzugt wird das Klemmelement gemäß den Merkmalen in Anspruch 6 selbstdichtend ausgebildet, wobei die Selbstdichtung bevorzugt durch die Ausbildung gemäß den Merkmalen des Anspruchs 7 erzielt wird. Belastungen, die während des Fahrens auf das Fahrzeugrad wirken, und die als axiale Zugkräfte auf den Endbereich der Seitenwand des Reifens entgegen den Klemmkräften der Klemmelemente wirken, bewirken eine geringfügige Winkelverkleinerung des Winkels alpha zur Radialen. Die Klemmkräfte des Klemmhebels werden hierdurch erhöht und die Dichtwirkung des Klemmhebels zur Dichtung der Reifenfelgenverbindung selbständig verbessert. Bei Nachlassen der auf das Fahrzeugrad wirkenden Belastung und somit der auf das den Endbereich des Seitenwand wirkenden axialen Zugkräfte bewirken die Rückstellkräfte des Klemmhebels die Herstellung des vor der Belastung vorhandenen Verbindungszustands.

Besonders einfach und zuverlässig ist die Ausbildung der Lagerfläche des Klemmhebels am Endbereich der Seitenwand des Reifens durch die Ausbildung des Reifens gemäß den Merkmalen des Anspruchs 8. Der Klemmhebel kann auf diese Weise radial und in axialer Richtung formschlüssig zur Knickstelle ausgebildet werden und zuverlässig die Klemm- und Rückstellkräfte übertragen.

Die Ausbildung gemäß den Merkmalen des Anspruchs 9 stellt eine vorteilhafte Ausbildung der Klemmhebelanordnung dar, die eine steife Ausbildung eines Klemmhebels einerseits und eine rückstellende Klemmwirkung andererseits in einfacher Weise miteinander verbindet.

Bevorzugt wird der Klemmhebel gemäß den Merkmalen des Anspruchs 10 ringförmig ausgebildet, so daß in einfacher und zuverlässiger Weise das Fahrzeugrad über den gesamten Umfang selbstdichtend befestigt werden kann. Bevorzugt ist die Ausbildung gemäß den Merkmalen des Anspruchs 11. Die Ausbildung des Klemmhebels als geschlossener, federelastischer Ring ermöglicht aufgrund dieser federelastischen Ausbildung eine zuverlässige Einleitung der rückstellenden Kräfte über den gesamten Umfang und somit eine zuverlässig selbstdichtende Wirkung mit minimaler Zahl an Bauteilen und Montageaufwand.

Die Ausbildung gemäß den Merkmalen des Anspruchs 12 ermöglicht in einfacher Weise die Montage oder Demontage des Klemmhebels durch einfaches Zusammendrücken der zusätzlichen Hebelarme und dadurch erfolgtes federelastisches Verbiegen des Hebels, so daß der Klemmhebel zur Montage in einfacher Weise in seine Klemmposition bewegt und durch Loslassen der Klemmhebel aufgrund der federelastischen Rückstellkräfte die Hebelarme so weit nach außen bewegt werden, daß die Arretierung selbständig hergestellt wird. Ebenso einfach kann durch Zusammendrücken der Hebel die Arretierung gelöst und der Klemmhebei axial aus der Ringkammer entfernt werden.

Die Ausbildung gemäß den Merkmalen des Anspruchs 13 ermöglicht in anderer Weise die einfache Arretierung des Klemmhebels. Die radial verteilten Einschnitte ermöglichen es, daß der Innenteil des Ringes federelastisch nach radial außen expandiert werden kann, so daß der Klemmhebel mit seiner radialen Innenfläche in einfacher Weise über eine mit größerem Außendurchmesser versehene Stützfläche der Ringkammer bewegt werden, an den Stellen der Arretierung in dort vorhandene radiale Vertiefungen durch die rückstellenden Kräfte eingreifen und somit in dieser Position axial arretiert werden kann.

Bevorzugt ist die Ausbildung gemäß den Merkmalen des Anspruchs 14. Das Klemmelement kann in einfacher Weise in seine Klemmposition bewegt werden, in der die rückstellende Federkraft eines Federelementes die axialen Anschlagsflächen miteinander in Wirkverbindung bringt, wodurch die Arretierung hergestellt ist. In ebenso einfacher Weise kann die Arretierung dadurch gelöst werden, daß die Wirkverbindung der Anschlagsfläche dadurch aufgehoben wird, daß der bewegbare Anschlag entgegen der rückstellenden Federkraft des Federelementes aus seiner Arretierpositon in seine Löseposition bewegt wird.

Durch eine einstückige Ausbildung von Klemmelement und Federelement ist in einfacher, zuverlässiger Weise die selbstdichtende Klemmwirkung herstellbar. Durch einstückige Ausbildung von Federelement und bewegbarem Anschlag ist in einfacher Weise mit wenigen Bauteilen eine Arretierung des Klemmelements in Klemmposition herstellbar. Durch einstückige Ausbildung von Klemmelement, Federelement und gleichzeitig bewegbarem Anschlag läßt sich mit minimalem Aufwand eine selbstdichtende Klemmwirkung herstellen und zuverlässig die einfache Arretierung herstellen und aufrechterhalten.

Bevorzugt ist die Ausbildung gemäß den Merkmalen des Anspruchs 16, durch die in einfacher Weise die selbstdichtende Klemmwirkung und/oder zuverlässige Arretierung über den gesamten Umfang der Ringkammer mit minimalem Aufwand erfolgt. Bevorzugt ist die einstückige Ausbildung gemäß den Merkmalen des Anspruchs 17.

Die Ausbildung gemäß den Merkmalen von Anspruchs 18 ermöglicht die Ausbildung eines Fahrzeugrades mit minimalem Aufwand für die Herstellung des Reifens. Die Ausbildung gemäß den Merkmalen des Anspruchs 19 ermöglicht eine Montage und Demontage des Reifens auf mit für Notlaufeigenschaften optimierten Feigen durch einfaches Dehnen der Endbereiche der Seitenwand zur Montage über die Notlaufstützflächen hinweg. Bevorzugt sind die Ausbildungen gemäß den Mekrmalen der Ansprüche 20 und 21. Die Ausbildung gemäß den Merkmalen des Anspruchs 22 ermöglicht eine optimale Stütze der für die Handlingeigenschaften erforderlichen unteren Seitenwandbereiche bei gleichzeitiger optimaler Konturgestaltung durch Nutzung nahezu der gesamten Reifenhöhe zur Einfederung.

Die Erfindung wird im folgenden anhand der in den Figuren 1 bis 5 dargestellten Ausführungsformen näher erläutert.

Hierin zeigen
Fig. 1 eine Querschnittsdarstellung eines erfindungsgemäßen Fahrzeugrades,
Fig. 2 eine Detaildarstellung der Klemmverbindung von Fig. 1,
Fig. 3 eine Teildarstellung gemäß Fig. 2 jedoch mit alternativer Ausführung des Klemmrings,
Fig. 4 eine weitere Ausführungsform des Klemmrings von Fig. 2 gemäß Draufsicht nach Schnitt IV-IV von Fig. 2,
Figuren 5a - d schematische Darstellungen zur Erläuterung der Montage.

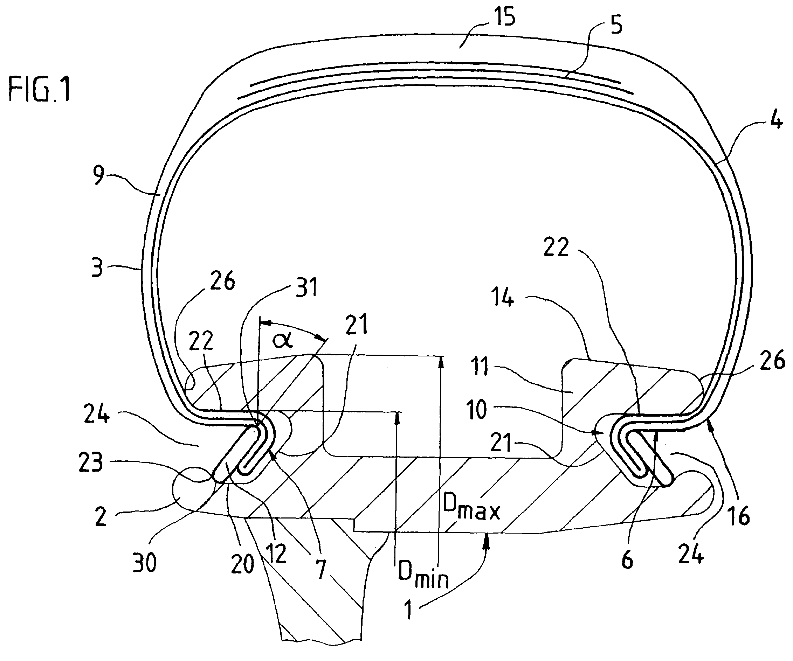

Fig. 1 zeigt ein Fahrzeugrad mit wulstlosem Fahrzeugluftreifen 3 und Felge 1 mit einem Verhältnis von maximaler Höhe H zu maximaler Breite B des Fahrzeugluftreifens H/B ≤ 0,6.Der Fahrzeugluftreifen 3 weist eine über den Umfang des Reifens und von radial inneren Endbereich 6 der linken Seitenwand des Fahrzeugluftreifens zum radial inneren Endbereich der rechten Seitenwand 6 reichende, nicht näher dargestellte, Innenschicht auf, über die eine Karkasse 4 radialer Bauart mit beispielsweise zwei Karkassenlagen aufgebaut ist. Im Bereich der Lauffläche ist radial außerhalb der Karkasse 4 ein Gürtel 5 bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifens hinweg und erstreckt sich in axialer Richtung von einem Reifenschulterbereich in den anderen.

Die Stahlcorde verlaufen im spitzen Winkel von beispielsweise 10-30 ° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen 15 aus Kautschukmaterial aufgelegt. Im Seitenwandbereich 9 ist Kautschukmaterial auf die Karkasse 4 aufgelegt. Das Seitenwandkautschukmaterial reicht vom Schulterbereich bis zum radial inneren Endbereich der Seitenwand 6.

Die einstückig ausgebildete Felge 1 ist an ihren beiden axialen Stirnseiten jeweils mit einer konzentrisch zur Feige angeordneten Ringkammer 10 mit einer radial inneren Ringkammerwand 20, einer axial inneren Ringkammerwand 21, einer radial äußeren Ringkammerwand 22 und einer axial äußeren Ringkammerwand 23 einstückig ausgebildet. Die Ringkammerwand 23 begrenzt das radial nach außen gerichtete Felgenhorn 2. Axial nach innen zwischen Felgenhorn 2 und radial äußerer Ringkammerwand 22 ist eine ringförmige Durchgangsöffnung 24 von axial außen zur Ringkammer hin ausgebildet. Die Ringkammewand 23 und die Ringkammerwand 21 sind von der Ringkammerwand 20 ausgehend in axialer Richtung konisch erweitert ausgebildet. Auf der radial äußeren Seite der Felge erstreckt sich ein Notlaufsattel 11 mit seiner Notlaufsatteloberfläche 14 von axial außen nach axial innen über die Position der Ringkammer 10 hinweg. Jede Notlaufsatteloberfläche erstreckt sich soweit nach axial innen, daß der Gürtel in seinen axialen Randzonen von der Schulter jeweils mit 10 bis 30 %, beispielsweise 25%, axial überdeckt ist.

Der wulstlose Fahrzeugluftreifen 3 umgreift mit seinen unteren Seitenwandbereichen 16 die axialen Stirnflächen 26 der Felge. Die Krümmung der Stirnfläche 26 der Feige entspricht der gewünschten Reifenkontur im Bereich der Stirnfläche.

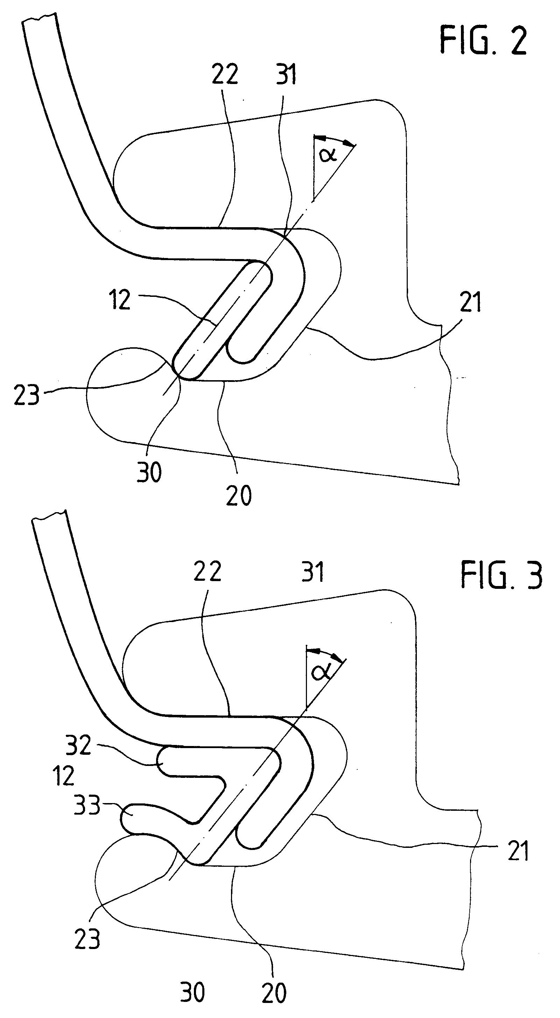

Wie in Fig. 1 und 2 zu erkennen ist, ist am Ende des unteren Seitenwandbereiches 16 jeweils der Endbereich 6 der Seitenwand mit zur Außenseite des Reifens über den gesamten Umfang ausgebildetem knickförmigem Ansatz 7 ausgebildet. Die Karkasse erstreckt sich bis in den knickförmigen Ansatz 7.

In der Ringkammer 10 erstreckt sich radial innerhalb des Endbereichs 6 der Seitenwand zwischen einer Lagerfläche 30 in der Ringkammerwand 23 und einer Lagerfläche 31 im knickförmigen Ansatz 7 des Reifens ein Klemmhebel 12, der sich in Umfangsrichtung des Reifens über den gesamten Umfang der Ringkammer erstreckt. Der Klemmhebel 12 ist in jeder die Fahrzeugradachse beinhaltenden Schnittebene mit seinem sich zwischen den beiden Lagerstellen 30 und 31 erstreckenden Hebelarm derart ausgebildet, daß der die beiden Lagerflächen 30 und 31 verbindende Hebelarm unter einem Winkel alpha zur Radialen von der Lagerstelle 30 in axialer Richtung nach innen zum Fahrzeugrad hin zur Lagerfläche 31 steigend verläuft. Der als Klemmring ausgebildete Klemmhebel 12 klemmt somit den Endbereich 6 der Seitenwand über die im knickförmigen Absatz 7 ausgebildete Lagerfläche 31 radial nach außen gegen die Felge und verspannt ihn in axialer Richtung nach axial innen zur Fahrzeugradmitte hin. Der Fahrzeugreifen wird mit Hilfe des Klemmrings luftdicht an die Ringkammerwand 22 gepreßt.

Der Klemmring 12 ist beispielsweise aus Federstahl ausgebildet. Belastungen, die beispielsweise bei Kurvenfahrten mit hohen Geschwindigkeiten während des Betriebes auf das Fahrzeugrad einwirken, können bewirken, daß der Endbereich 6 der Seitenwand mit nach axial außen gerichteten Zugkräften belastet wird, so daß aufgrund von Dehnungen der unteren Reifenseitenwand der knickförmige Ansatz 7 aus seinem ursprünglichen Zustand geringfügig nach axial außen in seiner Position verändert wird. Hierdurch wird der Klemmhebel mit seinem mit der Lagerfläche 31 korrespondierenden Hebelende ebenfalls entgegen den rückstellenden Federkräften des Klemmhebels geringfügig nach axial außen bewegt. Hierdurch wird die radiale Klemmkraft erhöht, so daß die zwischen Reifen und Ringkammerwand 22 bestehende Dichtung zusätzlich erhöht wird. Bei Nachlassen der die auf die untere Seitenwand des Reifens wirkenden Zugkräfte verursachenden Belastung bewirken die rückstellenden federelastischen Kräfte des Klemmhebels, daß die Lagerfläche 31 und somit das untere Ende der Seitenwand wieder in den ursprünglichen Zustand am Reifen zurückversetzt wird.

Der durch den Klemmring 12 erzeugte Formschluß sichert den Sitz des Reifens auf der Felge während des Fahrens.

Im Bereich der Stirnfläche 26 der Feige liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindämpfung dieser Kräfte wirkt auf die Seitenwände 9 des Reifens eine resultierende Kraft F_{A}, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfall unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch die Stirnfläche 26 versteift. Ein sicheres Handling ist gewährleistet.

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

Der nach axial innen reichende Notlaufsattel 11 erstreckt sich über den gesamten Umfangsbereich des Reifens. Bei plötzlichem Innendruckverlust stützt sich der Reifen mit seinem Laufstreifenbereich auf den beiderseitig vorgesehenen, mit im wesentlichen zylindrischer oder nach axial innen mit leicht konisch erweiterter Oberfläche ausgebildeten Notlaufsattel 11 ab. Frühzeitige Zerstörung und Ablösung des Reifens werden vermieden.

Ebenso ist es denkbar, die radial äußere Oberfläche der Notlaufstützflächen mit zusätzlichem Stützmaterial zu belegen. Das zusätzliche Stützmaterial ist aus hartem Kunststoff, Gummi oder Kunstsotffschaum ausgebildet, das zur Dämpfung unempfindlich gegen Stöße ist und das gute Gleiteigenschaften für den Notlauf aufweist.

Soweit der Abrieb zwischen Stirnfläche 26 und unterer Seitenwand unerwünscht groß wird, ist es möglich, zusätzlich zwischen Stirnfläche und unterem Endbereich der Seitenwand einen zusätzlichen Streifen von abriebfestem Material, beispielsweise von abriebfestem Gummi oder Kunststoff auszubilden. Der abriebfeste Streifen kann bis in die Ringkammer reichen.

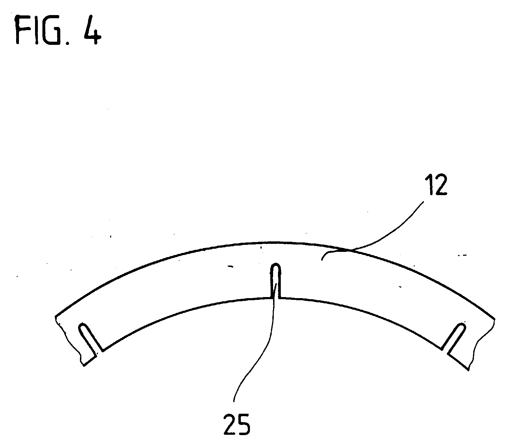

Wie in der Darstellung von Fig. 4 zu erkennen ist, ist der Klemmring 12 an seiner radial inneren Seite mit in Umfangsrichtung des Reifens äquidistant zueinander ausgebildeten Einschnitten 25 versehen, die es ermöglichen, daß der zwischen zwei benachbarten Einschnitten 25 ausgebildete radial innere Klemmringabschnitt entgegen der federelastischen rückstellenden Wirkung des Klemmrings radial nach außen erweitert werden kann.

Anhand der schematischen Darstellungen der Figuren 5a bis 5d wird im Folgenden die Montage des Reifens auf einer Feige beschrieben. Die Notlaufstützflächen 14 weisen einen maximalen Außendurchmesser Dmax, die beiden Ringkammerwände 22 einen minimalen Innendurchmesser Dmin auf.

Zur Montage wird der Reifen 3 konzentrisch zur Felge an die Felge in den Figuren von rechts axial herangeführt. Das linke Ende der Seitenwand wird entgegen der elastischen Rückstellkräfte des Endes der Seitenwand in Umfangsrichtung soweit gedehnt, daß der Innendurchmesser der Seitenwand größer als der maximale Außendurchmesser Dmax der Notlaufstützflächen ist. Danach wird der Reifen 3 weiter konzentrisch zur Felge axial zur Felge hinbewegt, wobei das linke Ende der Seitenwand unter Beibehaltung seines gedehnten Zustandes mit Spiel zu den Notlaufstützflächen 14 axial über die Felge geschoben wird. Sobald das linke Ende der Seitenwand eine Position auf der linken Seite axial außerhalb der linken Stirnfläche 26 erreicht hat, wird das Ende 6 der Seitenwand unter Ausnutzung der elastischen Rückstellkräfte wieder in seiner Umfangslänge soweit zurückgestellt, daß er wieder den ungedehnten und ungestauchten Zustand einnimmt. Dieser Zustand ist in Fig. 5a dargestellt.

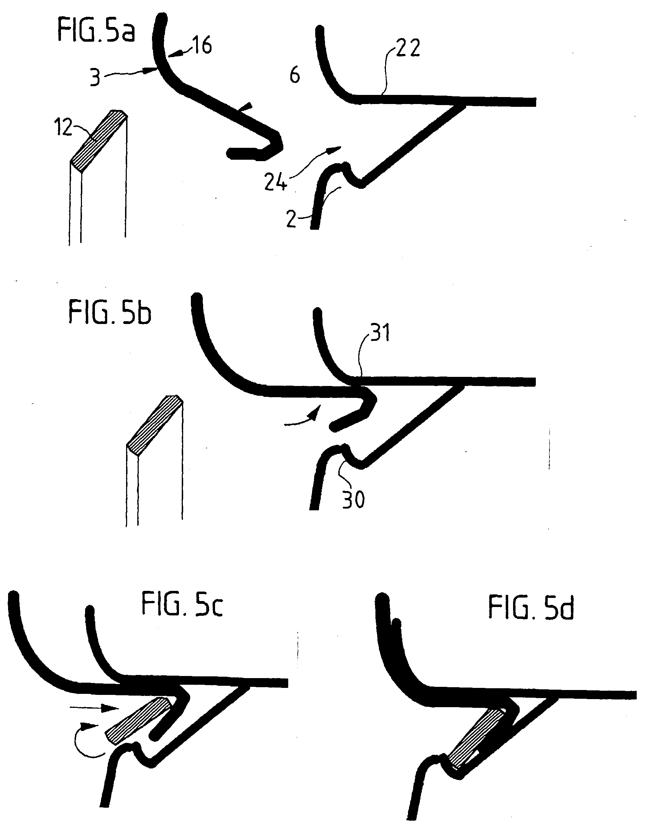

Wie durch die Pfeildarstellung von Fig. 5b dargestellt, wird das untere Ende 6 der Reifenseitenwand durch die Ringöffnung 24 hindurch an die Sitzfläche des Endbereichs 6 der Seitenwand an der Ringkammerwand 22 angelegt, die der untere Seitewandbereich im Fahrzeugbetrieb einnehmen soll.

Danach wird , wie in Fig. 5c dargestellt ist, der Klemmring 12 axial konzentrisch über das Felgenhorn 2 geschoben, wobei sich die zwischen den benachbarten Einschnitten 25 befindlichen radial inneren Umfangsabschnitte des Klemmrings 12 aufgrund des größeren Außendurchmessers des Felgenhorns 2 gegenüber dem kleineren Innendurchmesser des Klemmrings entgegen rückstellenden Federkräften des Klemmrings 12 in radialer Richtung zu einem größeren Innendurchmesser des Klemmrings erweitern, so daß der Klemmring mit seinem Innendurchmesser vollständig über das Felgenhorn bewegt werden kann. Der Klemmring wird so weit axial nach innen verschoben, daß er mit seiner korrespondierend zur Lagerfläche 31 ausgebildeten Lagerfläche an der Lagerfläche 31 anliegt und die zwischen den benachbarten Einschnitten 25 ausgebildeten radial inneren Umfangsabschnitte aufgrund der rückstellenden Kräfte des Klemmrings nach radial innen zurückgestellt werden, so daß die korrespondierend zur Lagerfläche 30 der Ringkammerwand 23 ausgebildete Lagerfläche des Klemmrings 12 in klemmenden Berührkontakt zur Lagerfläche 30 gelangt.

Der Fahrzeugreifen wird in seinem unteren Seitenwandbereich 16 von der Stirnfläche 26 der Felge in axialer Richtung nach innen und über den Klemmring 12 und die Lagerflächen 30 und 31 in axialer Richtung nach außen formschlüssig gestützt. In radialer Richtung wird der Fahrzeugluftreifen 3 vom Klemmring über die Lagerflächen 30 und 31 an der Felge dichtend fixiert. Somit wird durch einfaches Aufschieben des Klemmrings 12 über das Felgenhorn 2 in die Ringkammer eine selbstsichernde formschlüssige Fixierung des Fahrzeugluftreifens auf der Felge erzielt.

Zur Demontage des Fahrzeugluftreifens kann der Klemmring 12 einfach dadurch gelöst werden, daß die zwischen den benachbarten Einschnitten 25 befindlichen radial inneren Umfangsbereiche des Klemmrings radial so weit expandiert werden, daß der Klemmring in axialer Richtung über das Felgenhorn 2 nach außen gezogen und entfernt werden kann. Danach kann der Fahrzeugluftreifen in entsprechend zur Montage umgekehrter Reihenfolge von der Felge entfernt werden.

Das Expandieren der zwischen den benachbarten Einschnitten 25 durch diese eingeschlossenen radial inneren Umfangsbereiche des Klemmrings 12 kann dadurch erleichtert werden, daß beispielsweise, wie in Fig. 2 dargestellt ist, in der Felge über den Umfang verteilt Auswurfbohrungen 13 ausgebildet sind, durch die beispielsweise mit Hilfe eines Stiftes jeweils einer der radial inneren zwischen den benachbarten Einschnitten 25 eingeschlossenen Umfangsbereiche des Klemmrings 12 entgegen der rückstellenden Federwirkung des Klemmrings radial angehoben werden.

Der Klemmring ist in Umfangsrichtung vollständig geschlossen.

Es ist auch denkbar, den Klemmring in seinem Umfang mit einer einzigen Umfangsteilung auszubilden, so daß er zwei sich möglicherweise sogar überlappende Umfangsenden aufweist. In dieser Ausführungsform sind die obengenannten Einschnitte 25 nicht erforderlich. Der Klemmring kann bei der Montage axial über das Felgenhorn 2 bewegt werden, wobei er sich unter der rückstellenden Federkraft des Klemmrings in Umfangsrichtung aufweitet, wobei die beiden in Umfangsrichtung ausgebildeten Enden des Umfangsringes sich relativ zueinander in Umfangsrichtung bewegen. Die rückstellenden Federkräfte des Klemmrings bewirken, daß der Klemmring im Anschluß an das Felgenhorn 2 seine Klemmposition mit reduziertem Umfang einnimmt.

Die in Umfangsrichtung geöffnete Ausbildung des Klemmrings birgt jedoch die Gefahr der Beschädigung des Gummimaterials des Reifens durch die Umfangsbewegung der Umfangsenden. Um dieser Gefahr entgegenzuwirken, kann es sinnvoll sein, zusätzliches abriebreduzierendes Material zwischen Klemmring und Lagerfläche 31 auszubilden.

In Fig. 3 ist eine weitere Ausführungsform des bereits in Fig. 1 und 2 dargestellten Klemmrings 12 dargestellt. Dabei ist der Klemmring 12 in seiner Querschnittsform in den Schnittebenen durch die Radachse an seinen beiden Hebelenden mit zusätzlichen nach axial außen durch die Ringöffnung 24 reichenden Hebelarmen 32 und 33 ausgebildet. In dieser Ausführung erfolgt die Montage des Klemmrings 12 dadurch, daß die an den zwischen den Einschnitten 25 befindlichen radial inneren Umfangsabschnitten des Klemmhebels 12 ausgebildeten Klemmhebels 33 nach radial außen zu dem Hebelarm 32 gedrückt werden, wodurch die zwischen den Einschnitten 25 befindlichen radial inneren Umfangsbereiche des Klemmrings 12 in radialer Richtung entgegen der rückstellenden Federwirkung des Klemmrings radial so weit angehoben werden, daß der Klemmring vollständig über das Felgenhorn bewegt werden kann. Im Anschluß daran bewirken die rückstellenden Federkräfte, daß die zwischen den Einschnitten 35 befindlichen radial inneren Umfangsabschnitten des Klemmrings 12 wieder in radialer Richtung nach innen bewegt werden, so daß der Klemmring, wie bereits oben dargestellt, den Reifen dichtend fixiert.

Im einer Ausführungsform ist das Ende der Seitenwand zusätzlich mit einem Wulst mit Gummikern verstärkt. Der Durchmesser Dmax ist beispielsweise um das 1,2-fache größer als der Innendurchmesser Dmin in der Ringkammerwand. Als Gummimaterial des Wulstes wird ein Gummimaterial mit einer Dehnungsfähigkeit und mit einer Stauchbarkeit gewählt, die ein solches Dehnen und Stauchen des Wulstes in Umfangsrichtung erlauben, daß das Ende der Seitenwand über die Notlaufstützfläche 14 und in die Ringkammer mit Spiel axial bewegt werden können. Beispielsweise ist das Gummimaterial so gewählt, daß es eine Umfangsdehnung um 25% und eine Umfangsstauchung um 2,7% ermöglicht.

Die Notlaufstützflächen können auch mit einem größeren oder kleineren maximalen Außendurchmesser Dmax entsprechend den individuell einzustellenden Notlaufeigenschaften eines Reifens ausgebildet sein. Der maximale Durchmesser Dmax der Notlaufstützflächen ist dabei bei Standardreifen optimalerweise um einen Faktor1,1 bis 1,2 größer als der Innendurchmesser Dsi des Endes der Seitenwand im montierten Zustand des Fahrzeugrades. Er kann in Spezialfällen jedoch auch um einen Faktor zwischen 1,05 und 1,3 größer sein als der Innendurchmesser Dsi des Endes der Seitenwand im montierten Zustand des Fahrzeugrades. Als Gummimaterial des Wulstes wird hierfür jeweils ein Gummimaterial mit einer Dehnungsfähigkeit gewählt, die ein solches Dehnen des Endes der Seitenwand in Umfangsrichtung erlauben, daß das Ende der Seitenwand über die Notlaufstützfläche 14 und in die Ringkammer mit Spiel axial bewegt werden können. Dementsprechend wird das Ende der Seitenwand, das im montierten Zustand des Fahrzeugrades ungedehnt ist, derart ausgebildet, daß es eine Dehnbarkeit zwischen 10 und 20 % bei Standardreifen und in den Spezialfällen eine Dehnbarkeit zwischen 5 und 30 % aufweist.

### Bezugszeichenliste

- 1: Felge
- 2: Felgenhorn
- 3: Fahrzeugluftreifen
- 4: Karkasse
- 5: Gürtel
- 6: Endbereich der Seitenwand
- 7: knickförmiger Ansatz
- 9: Seitenwand
- 10: Ringkammer
- 11: Notlaufsattel
- 12: Klemmring
- 13: Auswurföffnung
- 14: Notlaufsatteloberfläche
- 15: Lauffläche
- 16: unterer Seitenwandbereich
- 20: Ringkammerwand
- 21: Ringkammerwand
- 22: Ringkammerwand
- 23: Ringkammerwand
- 24: Ringöffnung
- 25: Einschnitt
- 26: Stirnfläche der Felge
- 30: Lagerfläche
- 31: Lagefläche
- 32: Hebelarm
- 33: Hebelarm

## Patentansprüche

1. Fahrzeugrad mit - insbesondere einteiliger - Felge und mit einem - insbesondere schlauchlosen - Luftreifen mit zwei Reifenseitenwänden,
• bei dem die Felge wenigstens in einer axialen Stirnseite mit einer Ringkammer zur Aufnahme des radial inneren Endbereiches einer Seitenwand ausgebildet ist,
• bei dem wenigstens ein Klemmelement zum Festklemmen des radial inneren Endbereiches der Seitenwand gegen eine Stützfläche in der Ringkammer aus einer Klemmposition zum Klemmen des radial inneren Endbereiches der Seitenwand in eine Freigabeposition zum Lösen der Klemmung bzw aus seiner Freigabeposition in die Klemmposition axial bewegbar angeordnet ist, und
• bei dem zwischen Felge und Klemmelement ein Federschnellverschluß zum axialen Arretieren des Klemmelements auf der Felge in der Klemmposition ausgebildet ist.

2. Fahrzeugrad gemäß den Merkmalen von Anspruch 1,
wobei das Klemmelement aus Metall, insbesondere aus Stahl ausgebildet ist.

3. Fahrzeugrad gemäß den Merkmalen von Anspruch 2,
wobei das Klemmelement aus federelastischem Material, insbesondere aus Federstahl ausgebildet ist.

4. Fahrzeugrad gemäß den Merkmalen von einem oder mehreren der vorangegangenen Ansprüche,
wobei das Klemmelement Teil eines Ringes ist, der im montierten Zustand des Fahrzeugrades konzentrisch zur Felge - insbesondere in der Ringkammer - angeordnet ist.

5. Fahrzeugrad gemäß den Merkmalen von Anspruch 4,
wobei Ring und Klemmelement gemeinsam als einstückiger Klemmring ausgebildet sind.

6. Fahrzeugrad gemäß den Merkmalen von Anspruch 1,2 oder 3,
wobei das Klemmelement selbstdichtend ausgebildet ist.

7. Fahrzeugrad gemäß den Merkmalen von Anspruch 6
wobei das Klemmelement wenigstens einen Klemmhebel aufweist, der im montierten Zustand mit seinem einen Ende auf einer radial inneren Lagerfläche auf der Ringkammerinnenwand und mit seinem anderen Ende in einer im radial inneren Endbereiches der Seitenwand des Reifens ausgebildeten radial äußeren Lagerfläche abstützt,
wobei die Verbindungslinie zwischen den beiden Lagerstellen des Klemmhebel in einer radialen Schnittebene durch die Fahrzeugradachse von der radial inneren Lagerfläche auf der Ringkammerinnenwand zur radial außeren im radial inneren Endbereiches der Seitenwand des Reifens ausgebildeten Lagerfläche in achsialer Richtung zur Fahrzeugradmitte hin unter Einschluß eines Winkels α≤45 zur Radialen steigend ausgebildet ist.

8. Fahrzeugrad gemäß den Merkmalen von Anspruch 7
wobei der Reifen mit seinem Ende der Seitenwand in radialer Richtung nach innen abgeknickt ausgebildet ist und die Knickstelle die radial äußere Lagerstelle des Klemmhebels ist.

9. Fahrzeugrad gemäß den Merkmalen von Anspruch 7 oder 8,
wobei der Klemmhebel im montierten Zustand des Fahrzeugrades um die radial inneren Lagerfläche auf der Ringkammerinnenwand in der radialen Schnittebene durch die Fahrzeugradachse schwenkbar ausgebildet ist.

10. Fahrzeugrad gemäß den Merkmalen von Anspruch 7,8 oder 9,
wobei der Klemmhebel im montierten Zustand des Fahrzeugrades sich ringförmig über den gesamten Umfang der Ringkammerseitenwand erstreckt.

11. Fahrzeugrad gemäß den Merkmalen von Anspruch 10,
wobei der Klemmhebel ein geschlossener, federelastischer Ring ist.

12. Fahrzeugrad gemäß den Merkmalen von Anspruch 10,
wobei der Klemmhebel an seinen beiden Hebelenden mit im montierten Zustand des Fahrzeugrades nach axial außen gerichteten zusätzlichen Hebelarmen zum federelastischen Verbiegen des Hebels zur Montage und oder Demontage ausgebildet ist.

13. Fahrzeugrad gemäß den Merkmalen von Anspruch 10 oder 11,
wobei der Klemmhebel ein geschlossener Ring ist, der an seiner radial inneren Seite mit über den Umfang - insbesondere äquidistant - verteilten radialen Einschnitten - insbesondere gleicher Länge- versehen ist.

14. Fahrzeugrad gemäß den Merkmalen von einem der vorangegangenen Ansprüche, wobei die Felge an der radial inneren Ringkammerwand mit einem axialen Anschlag mit nach axial innen gerichteter Anschlagsfläche ausgebildet ist,
wobei das Klemmelelement mit einem Anschlag mit korrespondierend ausgebildeter nach axial außen gerichteter Anschlagsfläche ausgebildet ist,
wobei einer der beiden Anschläge - insbesondere der am Klemmelement ausgebildete Anschlag - in radialer Richtung entgegen der rückstellenden Federkraft eines Federelementes aus einer Arretierposition in der sich die axialen Anschlagsflächen in gleicher radialer Position befinden in eine Löseposition, in der die Anschlagsflächen radial soweit voneinander beabstandet sind , daß das Klemmelement mit seinem Anschlag axial über die Ringkammerinnenwand mit deren Anschlag bewegt mit Spiel bewegbar ist, und wobei bei Einnahme der axialen Position zur Arretierung der bewegbare Anschlag der rückstellenden Federkraft eines Federelementes entsprechend wieder zurück in die Arretierposition bewegbar ist.

15. Fahrzeugrad gemäß den Merkmalen von Anspruch 7,
wobei das Klemmelement und das Federelement einstückig ausgebildet sind und/oder wobei das Federelement und der bewegbare Anschlag einstückig ausgebildet sind.

16. Fahrzeugrad gemäß den Merkmalen von Anspruch 7,
wobei das Klemmelement und das Federelement Teil eines Ringes sind, der im montierten Zustand des Fahrzeugrades konzentrisch zur Felge - insbesondere in der Ringkammer - angeordnet ist, und/oder wobei das Federelement und der bewegbare Anschlag Teil eines Ringes sind, der im montierten Zustand des Fahrzeugrades konzentrisch zur Felge - insbesondere in der Ringkammer - angeordnet ist.

17. Fahrzeugrad gemäß den Merkmalen von Anspruch 7,
wobei das Klemmelement und das Federelement und der bewegbare Anschlag einstückig als Klemmring ausgebildet sind.

18. Fahrzeugrad gemäß den Merkmalen von Anspruch 1 oder 2,
wobei der radial inneren Endbereiches der Seitenwand wulstkernlos - und insbesondere als profilierter Fuß verdickt - ausgebildet ist.

19. Fahrzeugrad gemäß den Merkmalen von einem der vorangegangenen Ansprüche, bei dem der maximale Durchmesser der Notlaufstützflächen um einen Faktor zwischen 1,05 und 1,3 - insbesondere zwischen 1,1 und 1,2 - größer als der Innenringdurchmesser des radial inneren Endbereiches der Seitenwand im montierten Zustand des Fahrzeugrades beträgt.

20. Fahrzeugrad gemäß den Merkmalen von einem der vorangegangenen Ansprüche, wobei der radial inneren Endbereiches der Seitenwand eine Dehnbarkeit von 5 bis 30 % -insbesondere 10 bis 20 % - aufweist.

21. Fahrzeugrad gemäß den Merkmalen von einem der vorangegangenen Ansprüche, wobei der Wulstkern eine Dehnbarkeit von 5 bis 30 % -insbesondere 10 bis 20 % - aufweist und
wobei der radial inneren Endbereiches der Seitenwand insbesondere im montierten Zustand des Fahrzeugrades in Umfangsrichtung ungedehnt ist.

22. Fahrzeugrad gemäß den Merkmalen von einem der vorangegangenen Ansprüche, wobei der Luftreifen im unteren Seitenwandbereich an der Feige anliegt und mit seinem radial inneren Endbereich der Seitenwand an der Feige befestigt ist.

23. Verfahren zur Montage eines Luftreifens auf einer Felge mit Notlaufstützfläche mit beidseitig der Felge jeweils in die - insbesondere einstückig - axiale Stirnseite der Felge ausgebildeter Ringkammer zur Aufnahme des radial inneren Endbereiches der Seitenwand und eines Klemmrings radial innerhalb des radial inneren Endbereiches der Seitenwand zur Befestigung des Luftreifens an der Feige durch axiales Einführen des radial inneren Endbereiches der Seitenwand und des Klemmrings durch die Ringkammer,
- wobei der Reifen zunächst mit seinem radial inneren Endbereich der Seitenwand in die zur Aufnahme des radial inneren Endbereiches der Seitenwand ausgebildete Ringkammer eingeführt wird und
- wobei der Reifen dann mit einem axial auf der Feige beweglichen Klemmelement durch axiale Bewegung des Klemmelements radial zwischen einer Lagerfläche in der Ringkammerinnenwand der Felge und dem radial inneren Endbereich der Seitenwand in eine Befestigungsposition, in der der Klemmring mittels eines Federschnellverschlusses selbständig arretiert, befestigt wird.
